# EUROPÄISCHE PATENTSCHRIFT

(11) **EP 4 356 596 B1**
(45) Veröffentlichungstag und Bekanntmachung des Hinweises auf die Patenterteilung: **28.05.2025**
(21) Anmeldenummer: 22751689.5
(22) Anmeldetag: 14.07.2022
(51) Int. Cl.: H04L 67/56, H04L 67/12, H04L 41/12, H04L 9/40, H04L 41/122, H04L 41/40, H04L 41/0895, H04L 41/0806

(54) **VERFAHREN UND SYSTEM ZUR BEREITSTELLUNG VON ZEITKRITISCHEN DIENSTEN MITTELS EINER ABLAUFSTEUERUNGSUMGEBUNG**
METHOD AND SYSTEM FOR PROVIDING TIME-CRITICAL SERVICES BY MEANS OF A PROCESS CONTROL ENVIRONMENT
PROCÉDÉ ET SYSTÈME DE FOURNITURE DES SERVICES TEMPORELLEMENT CRITIQUES AU MOYEN D'UN ENVIRONNEMENT DE COMMANDE DE DÉROULEMENT

(30) Priorität: 13.08.2021 EP 21191302
(43) Veröffentlichungstag der Anmeldung: 24.04.2024
(73) Patentinhaber: Siemens Aktiengesellschaft, 80333 München (DE)
(72) Erfinder: ALBRECHT, Harald, 90475 Nürnberg (DE); DREHER, Michael, 71229 Leonberg (DE)
(74) Vertreter: Siemens Patent Attorneys
(86) Internationale Anmeldenummer: PCT/EP2022/069739
(87) Internationale Veröffentlichungsnummer: WO 2023/016744

(56) Entgegenhaltungen:
- EP-A1- 3 751 421
- US-A1- 2020 028 848
- CALCOTE LEE: "Container Networking: A Breakdown, Explanation and Analysis - The New Stack", 14 September 2016 (2016-09-14), XP055885327, Retrieved from the Internet <URL:https://thenewstack.io/container-networking-breakdown-explanation-analysis/> [retrieved on 20220131]

## Beschreibung

Die vorliegende Erfindung betrifft ein Verfahren sowie ein System zur Bereitstellung von zeitkritischen Diensten, insbesondere in einem industriellen Automatisierungssystem.

Industrielle Automatisierungssysteme umfassen üblicherweise eine Vielzahl von über ein industrielles Kommunikationsnetz miteinander vernetzten Automatisierungsgeräten und dienen im Rahmen einer Fertigungs- oder Prozessautomatisierung zur Steuerung oder Regelung von Anlagen, Maschinen bzw. Geräten. Aufgrund zeitkritischer Rahmenbedingungen in industriellen Automatisierungssystemen werden zur Kommunikation zwischen Automatisierungsgeräten überwiegend Echtzeit-Kommunikationsprotokolle, wie PROFINET, PROFIBUS, Real-Time-Ethernet oder Time-Sensitive Networking (TSN), verwendet. Insbesondere können Steuerungsdienste bzw. -anwendungen automatisiert und auslastungsabhängig auf aktuell verfügbare Server oder virtuelle Maschinen eines industriellen Automatisierungssystems verteilt werden.

Unterbrechungen von Kommunikationsverbindungen zwischen Rechnereinheiten eines industriellen Automatisierungssystems oder Automatisierungsgeräten können zu einer unerwünschten oder unnötigen Wiederholung einer Übermittlung einer Dienstanforderung führen. Außerdem können nicht oder nicht vollständig übermittelte Nachrichten beispielsweise einen Übergang oder Verbleib eines industriellen Automatisierungssystems in einen sicheren Betriebszustand verhindern.

In Ethernet-basierten Kommunikationsnetzen können Probleme entstehen, wenn Netzressourcen für eine Übermittlung von Datenströmen oder von Datenrahmen mit Echtzeitanforderungen konkurrierend für eine Übermittlung von Datenrahmen mit großem Nutzdateninhalt ohne spezielle Dienstgüteanforderungen beansprucht werden. Dies kann schließlich dazu führen, dass Datenströme oder Datenrahmen mit Echtzeitanforderungen nicht entsprechend einer angeforderten bzw. benötigten Dienstgüte übermittelt werden.

Aus EP 3 751 421 A1 ist ein Verfahren zur Bereitstellung von Steuerungsanwendungen bekannt, bei dem Kommunikationsnetzadressen von Ablaufsteuerungskomponenten, die Steuerungsanwendungen bereitstellen, sowie Identifikatoren der Ablaufsteuerungskomponenten oder von Server-Einrichtungen, auf denen die Ablaufsteuerungskomponenten ausgeführt werden, von einer Überwachungseinrichtung abfragt werden. Aus den abgefragten Kommunikationsnetzadressen und Identifikatoren sowie aus Bezeichnungen der Steuerungsanwendungen erzeugt eine Konfigurationssteuerungseinrichtung Konfigurationsinformationen für eine Weiterleitungseinrichtung. Die Weiterleitungseinrichtung nimmt Anfragen von Endgeräten zur Nutzung der Steuerungsanwendungen entgegen und leitet diese entsprechend den Konfigurationsinformationen an eine jeweilige Ablaufsteuerungskomponente weiter.

Die ältere internationale Patentanmeldung WO 2022/042905 A1 betrifft ein Verfahren zur Bereitstellung von zeitkritischen Diensten, denen jeweils zumindest eine Server-Komponente zugeordnet ist, die durch eine in eine Ablaufsteuerungsumgebung ladbare und dort ausführbare Ablaufsteuerungskomponente gebildet wird. Für die Server-Komponenten wird jeweils eine Funktionseinheit zur Verarbeitung eines Kommunikationsprotokollstapels verfügbar gemacht, die mit einer der Ablaufsteuerungsumgebung zugeordneten Funktionseinheit zur Verarbeitung eines Kommunikationsprotokollstapels verbunden ist. Die Dienste umfassen jeweils eine Verzeichnisdienst-Komponente zur Ermittlung mittels der Ablaufsteuerungsumgebung bereitgestellter Dienste. Die Verzeichnisdienst-Komponenten werden miteinander über eine separierte Kommunikationsschnittstelle verbunden. Mit der separierten Kommunikationsschnittstelle ist eine mittels einer weiteren Ablaufsteuerungskomponente gebildete Aggregator-Komponente verbunden, die Angaben über die mittels der Server-Komponenten bereitgestellten Dienste außerhalb der Ablaufsteuerungsumgebung verfügbar macht.

Anwender von mittels Containervirtualisierung oder vergleichbaren Virtualisierungskonzepten realisierten Steuerungsanwendungen für industrielle Automatisierungssysteme erwarten eine möglichst unkomplizierte Integration derartiger Anwendungen in ihre bestehende Infrastruktur. Ein Zugriff auf derartige virtualisierte Steuerungsanwendung erfolgt üblicherweise über einen Reverse-Proxy. Sowohl für Anwender als für Entwickler ist eine automatische Integration der virtualisierten Steuerungsanwendungen mit Reverse-Proxies wichtig, damit die virtualisierten Steuerungsanwendungen einfach und schnell genutzt werden können. Insbesondere eine sichere Trennung zwischen unterschiedlichen virtualisierten Steuerungsanwendungen innerhalb einer Anwendungsumgebung ist von großer Bedeutung, damit kritische Rückwirkungen, insbesondere Zugriffe auf Kommunikation und Daten anderer virtualisierter Steuerungsanwendungen, ausgeschlossen werden können. Bisherige IT-Lösungen erfordern hierfür jedoch einen sehr hohen Ressourcen- und Verwaltungsbedarf, der in industriellen Automatisierungssystemen äußerst problematisch ist.

Der vorliegenden Erfindung liegt die Aufgabe zugrunde, ein aufwandsarm realisierbares Verfahren zur Bereitstellung von zeitkritischen Diensten zu schaffen, das eine sichere Entkopplung zwischen mittels Containervirtualisierung oder vergleichbaren Virtualisierungskonzepten bereitgestellten Diensten ermöglicht, sowie eine geeignete Vorrichtung zur Durchführung des Verfahrens anzugeben.

Diese Aufgabe wird erfindungsgemäß durch ein Verfahren mit den in Anspruch 1 angegebenen Merkmalen und durch ein System mit den in Anspruch 12 angegebenen Merkmalen gelöst. Vorteilhafte Weiterbildungen sind in den abhängigen Ansprüchen angegeben.

Entsprechend dem erfindungsgemäßen Verfahren zur Bereitstellung von zeitkritischen Diensten mittels einer Ablaufsteuerungsumgebung ist den Diensten jeweils eine Server-Komponente zugeordnet, die zumindest eine Anwendungsinstanz umfasst und durch eine in die Ablaufsteuerungsumgebung ladbare sowie dort ausführbare Ablaufsteuerungskomponente gebildet wird. Mittels der Ablaufsteuerungsumgebung wird für jede Server-Komponente ein eigenes virtuelles Kommunikationsnetz verfügbar gemacht. Die virtuellen Kommunikationsnetze können insbesondere jeweils virtuelle Ethernet-Punkt-zu-Punkt-Verbindungen umfassen bzw. durch eine virtuelle Bridge innerhalb der Ablaufsteuerungsumgebung gebildet werden.

Die Ablaufsteuerungskomponenten sind bzw. umfassen insbesondere Software-Container, die jeweils von anderen Software-Containern oder Container-Gruppen, z.B. Pods, isoliert innerhalb der Ablaufsteuerungsumgebung auf einem Host-Betriebssystem einer Server-Einrichtung ablaufen. Grundsätzlich können für die Ablaufsteuerungskomponenten auch alternative Micro-Virtualisierungskonzepte, wie Snaps, verwendet werden. Insbesondere kann für jede Anwendungsinstanz jeweils eine Ablaufsteuerungskomponente in die Ablaufsteuerungsumgebung geladen und dort ausgeführt werden. Vorteilhafterweise nutzen die Software-Container jeweils gemeinsam mit anderen auf der jeweiligen Server-Einrichtung ablaufenden Software-Containern einen Kernel des Host-Betriebssystems der Server-Einrichtung. Speicherabbilder für die Software-Container können beispielsweise aus einem durch eine Vielzahl von Nutzern lesend bzw. schreibend zugreifbaren Speicher- und Bereitstellungssystem abgerufen werden.

Vorzugsweise ist die Ablaufsteuerungsumgebung eine Container-Engine, durch die ein Anlegen, Löschen bzw. Verknüpfen von virtuellen Ressourcen erfolgt. Dabei umfassen die virtuellen Ressourcen Software-Container, virtuelle Kommunikationsnetze und diesen zugeordnete Verbindungen. Beispielsweise kann die Ablaufsteuerungsumgebung eine Docker Engine oder einen Snap Core umfassen, die bzw. der auf einer Server-Einrichtung abläuft.

Erfindungsgemäß leitet ein Reverse-Proxy eines die Ablaufsteuerungsumgebung umfassenden Teilnetzes Dienstzugriffsanfragen zur Nutzung der Dienste außerhalb des Teilnetzes entsprechend vorgegebenen Weiterleitungsregeln an die jeweilige Server-Komponente über deren virtuelles Kommunikationsnetz weiter. Dabei werden die virtuellen Kommunikationsnetze jeweils für sämtliche Anwendungsinstanzen der jeweiligen Server-Komponente zur Weiterleitung der Dienstzugriffsanfragen genutzt. Auf diese Weise ermöglicht die vorliegende Erfindung eine verbesserte, automatisierte Netzwerk-Isolation von virtualisierten Steuerungsanwendungen bzw. Apps insbesondere gegenüber Steuerungsanwendungen bzw. Apps anderer Anbieter.

Insbesondere benötigen Anwender, App-Entwickler und Hersteller von gesteuerten Maschinen oder Geräten kein detailliertes Fachwissen über eine korrekte und sichere Integration von Reverse-Proxies und Apps beliebiger Anbieter in ihr jeweiliges Anwendungsumfeld. Außerdem sind hierfür keine Cluster-Orchestrierungssysteme erforderlich, die üblicherweise einen hohen Ressourcenbedarf aufweisen.

Erfindungsgemäß ermittelt eine Konfigurationseinheit für den Reverse-Proxy jeweils zu innerhalb des Teilnetzes gültigen Adressierungsinformationen, die den Server-Komponenten bzw. ihren virtuellen Kommunikationsnetzen zugeordnet sind, global gültige Zugangsinformationen und übermittelt die Zugangsinformationen abbildende Weiterleitungsregeln an den Reverse-Proxy. Vorzugsweise macht zumindest eine Verzeichnisdienst-Komponente die global gültigen Zugangsinformationen zur Nutzung der Dienste außerhalb des Teilnetzes verfügbar.

Die global gültigen Zugangsinformationen können beispielsweise Adressierungsinformationen und Zugriffsberechtigungen umfassen. Dabei werden die Zugriffsberechtigungen nach erfolgreicher Benutzer- bzw. Geräte-Authentifizierung verfügbar gemacht. Vorteilhafterweise bilden die Weiterleitungsregeln die Zugriffsberechtigungen für ausgewählte Benutzer bzw. Geräte auf ausgewählte Dienste ab. Die innerhalb des Teilnetzes gültigen Adressierungsinformationen können beispielsweise Kommunikationsnetz-Adressen, Port-Nummern, Host-Namen bzw. vollständige Domain-Namen sein.

Erfindungsgemäß wertet die Konfigurationseinheit Ereignis-Meldungen der Ablaufsteuerungsumgebung dahingehend aus, ob virtuelle Kommunikationsnetze innerhalb der Ablaufsteuerungsumgebung einzurichten oder zu löschen sind. Ein neu einzurichtendes virtuelles Kommunikationsnetz verbindet die Konfigurationseinheit mit dem Reverse-Proxy mittels eines an die Ablaufsteuerungsumgebung gerichteten ersten Steuerungsbefehls. Demgegenüber beendet die Konfigurationseinheit mittels eines an die Ablaufsteuerungsumgebung gerichteten zweiten Steuerungsbefehls eine Verbindung eines zu löschenden virtuellen Kommunikationsnetzes mit dem Reverse-Proxy. Außerdem gibt die Konfigurationseinheit nach einem Beenden der Verbindung des zu löschenden virtuellen Kommunikationsnetzes mit dem Reverse-Proxy mittels eines an die Ablaufsteuerungsumgebung gerichteten dritten Steuerungsbefehls ein Entfernen der jeweiligen Server-Komponente aus der Ablaufsteuerungsumgebung frei. Hierdurch ist sichergestellt, dass eine korrekte Reihenfolge für das Beenden der Verbindung mit dem Reverse-Proxy und für das Entfernen der jeweiligen Server-Komponente eingehalten wird. Damit wird vermieden, dass eine Server-Komponente bzw. ein Software-Container aufgrund einer bestehenden Verbindung mit dem Reverse-Proxy nicht entfernt werden kann.

Darüber hinaus ermittelt die Konfigurationseinheit entsprechend einer besonders bevorzugten Ausgestaltung der vorliegenden Erfindung, ob für eine in die Ablaufsteuerungsumgebung zu ladende sowie dort auszuführende Ablaufsteuerungskomponente bereits ein zugeordnetes virtuelles Kommunikationsnetz vorgesehen ist. Bei einem Vorhandensein des zugeordneten virtuellen Kommunikationsnetzes weist die Konfigurationseinheit die Ablaufsteuerungsumgebung an, dieses virtuelle Kommunikationsnetz für eine Anbindung der Ablaufsteuerungskomponente an den Reverse-Proxy zu verwenden. Demgegenüber weist die Konfigurationseinheit die Ablaufsteuerungsumgebung bei einem Fehlen eines zugeordneten virtuellen Kommunikationsnetzes vorteilhafterweise an, für die durch die Ablaufsteuerungskomponente gebildete Server-Komponente ein virtuelles Kommunikationsnetz innerhalb der Ablaufsteuerungsumgebung einzurichten und dieses virtuelle Kommunikationsnetz für eine Anbindung der Ablaufsteuerungskomponente an den Reverse-Proxy zu verwenden. Somit für beliebige virtualisierte Steuerungsanwendungen bzw. Apps je nach ihrer Klassifizierung eine passende Netzwerk-Isolation realisiert werden.

Das erfindungsgemäße System zur Bereitstellung von zeitkritischen Diensten mittels einer Ablaufsteuerungsumgebung ist insbesondere zur Durchführung eines Verfahrens entsprechend vorangehenden Ausführungen vorgesehen und umfasst eine Ablaufsteuerungsumgebung, ein die Ablaufsteuerungsumgebung umfassendes Teilnetz, einen Reverse-Proxy des Teilnetzes, eine Konfigurationseinheit für den Reverse-Proxy sowie mehrere, jeweils einem Dienst zugeordneten Server-Komponenten. Die Server-Komponenten umfassen jeweils zumindest eine Anwendungsinstanz und sind durch eine in die Ablaufsteuerungsumgebung ladbare sowie dort ausführbare Ablaufsteuerungskomponente gebildet.

Die Ablaufsteuerungsumgebung des erfindungsgemäßen Systems ist dafür ausgestaltet und eingerichtet, dass für jede Server-Komponente ein eigenes virtuelles Kommunikationsnetz verfügbar gemacht wird. Demgegenüber ist der Reverse-Proxy dafür ausgestaltet und eingerichtet, Dienstzugriffsanfragen zur Nutzung der Dienste außerhalb des Teilnetzes entsprechend vorgegebenen Weiterleitungsregeln an die jeweilige Server-Komponente über deren virtuelles Kommunikationsnetz weiterzuleiten. Darüber hinaus sind die virtuellen Kommunikationsnetze dafür ausgestaltet und eingerichtet, jeweils für sämtliche Anwendungsinstanzen der jeweiligen Server-Komponente zur Weiterleitung der Dienstzugriffsanfragen genutzt zu werden.

Die Konfigurationseinheit für den Reverse-Proxy des erfindungsgemäßen Systems ist dafür ausgestaltet und eingerichtet, jeweils zu innerhalb des Teilnetzes gültigen Adressierungsinformationen, die den Server-Komponenten bzw. ihren virtuellen Kommunikationsnetzen zugeordnet sind, global gültige Zugangsinformationen zu ermitteln und die Zugangsinformationen abbildende Weiterleitungsregeln an den Reverse-Proxy zu übermitteln. Außerdem ist die Konfigurationseinheit dafür ausgestaltet und eingerichtet, Ereignis-Meldungen der Ablaufsteuerungsumgebung auszuwerten, ob virtuelle Kommunikationsnetze innerhalb der Ablaufsteuerungsumgebung einzurichten oder zu löschen sind.

Darüber hinaus ist die Konfigurationseinheit des erfindungsgemäßen Systems dafür ausgestaltet und eingerichtet, mittels eines an die Ablaufsteuerungsumgebung gerichteten ersten Steuerungsbefehls ein neu einzurichtendes virtuelles Kommunikationsnetz mit dem Reverse-Proxy zu verbinden und mittels eines an die Ablaufsteuerungsumgebung gerichteten zweiten Steuerungsbefehls eine Verbindung eines zu löschenden virtuellen Kommunikationsnetzes mit dem Reverse-Proxy zu beenden. Ferner ist die Konfigurationseinheit dafür ausgestaltet und eingerichtet, nach einem Beenden der Verbindung des zu löschenden virtuellen Kommunikationsnetzes mit dem Reverse-Proxy mittels eines an die Ablaufsteuerungsumgebung gerichteten dritten Steuerungsbefehls ein Entfernen der jeweiligen Server-Komponente aus der Ablaufsteuerungsumgebung freizugeben.

Die vorliegende Erfindung wird nachfolgend an einem Ausführungsbeispiel anhand der Zeichnung näher erläutert. Es zeigt die
- Figur: eine Anordnung mit einer Server-Komponente zur Bereitstellung von Diensten eines industriellen Automatisierungssystems sowie mit einem Reverse-Proxy.

Die in der Figur dargestellte Anordnung umfasst eine Server-Einrichtung 110 zur Bereitstellung von Diensten bzw. Steuerungs- und Überwachungsanwendungen eines industriellen Automatisierungssystems. Die Dienste bzw. Steuerungs- und Überwachungsanwendungen des industriellen Automatisierungssystems sind exemplarisch für zeitkritische Dienste. Die Dienste bzw. Steuerungs- und Überwachungsanwendungen können beispielsweise auf Grundlage von OPC UA bereitgestellt werden. Somit umfassen die Dienste bzw. Steuerungs- und Überwachungsanwendungen Schnittstellendefinitionen, die für einen dauerhaften Zugriff auf die Dienste bzw. Steuerungs- und Überwachungsanwendungen genutzt werden können.

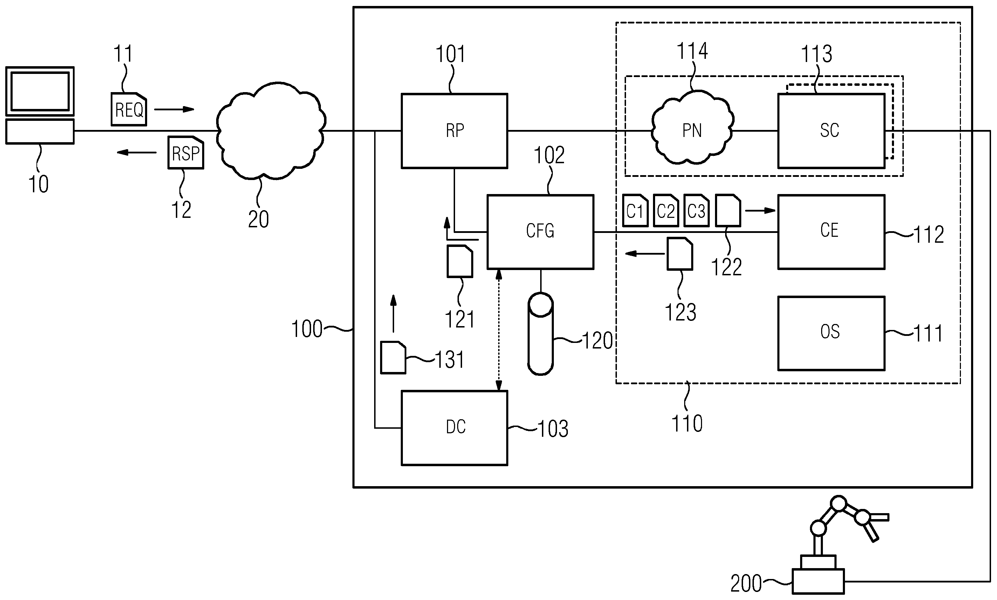

Außerdem umfasst die in Figur 1 dargestellte Anordnung ein Endgerät 10, das zumindest einem Benutzer zugeordnet ist, der im vorliegenden Ausführungsbeispiel Dienstzugriffsanfragen 11 zur Nutzung der Dienste über ein Kommunikationsnetz 20 an ein die Server-Einrichtung 110 umfassendes Automatisierungssystem bzw. Teilnetz 100 sendet und von der Server-Einrichtung dementsprechend Antworten 12 bzw. Messwerte und Statusmeldungen empfängt. Das Kommunikationsnetz 20 ist kann beispielsweise als Time-Sensitive Network ausgestaltet sein, insbesondere entsprechend IEEE 802.10, IEEE 802.1AB, IEEE 802.1AS, IEEE 802.1BA bzw. IEEE 802.1CB.

Die Server-Einrichtung 110 implementiert im vorliegenden Ausführungsbeispiel mittels einer Container-virtualisierten Server-Komponente 113 Funktionen von Steuerungsgeräten eines industriellen Automatisierungssystems, wie speicherprogrammierbaren Steuerungen, oder von Feldgeräten, wie Sensoren oder Aktoren. Im vorliegenden Ausführungsbeispiel dient Server-Einrichtung 110 einem Austausch von Steuerungs- und Messgrößen mit durch die Server-Einrichtung 110 gesteuerten Maschinen oder Vorrichtungen 200. Insbesondere ist die Server-Einrichtung 110 für eine Ermittlung geeigneter Steuerungsgrößen aus erfassten Messgrößen vorgesehen.

Das Endgerät 10 ist im vorliegenden Ausführungsbeispiel eine Bedien- und Beobachtungsstation und dient zur Visualisierung von Prozessdaten bzw. Mess- und Steuerungsgrößen, die durch die Server-Einrichtung 110 oder andere Automatisierungsgeräte verarbeitet bzw. erfasst werden. Insbesondere wird das Endgerät 10 zur Anzeige von Werten eines Regelungskreises und zur Veränderung von Regelungsparametern oder -programmen verwendet.

Den Diensten ist jeweils eine Server-Komponente 113 zugeordnet, die zumindest eine Anwendungsinstanz umfasst und durch eine in eine Ablaufsteuerungsumgebung 112 ladbare sowie dort ausführbare Ablaufsteuerungskomponente gebildet wird. Im vorliegenden Ausführungsbeispiel wird für jede Anwendungsinstanz jeweils eine Ablaufsteuerungskomponente in die Ablaufsteuerungsumgebung 112 geladen und dort ausgeführt. Die Ablaufsteuerungsumgebung 112 wird mittels der Server-Einrichtung 110 bereitgestellt und ist dort auf als Anwendung auf einem Host-Betriebssystem 111 der Server-Einrichtung 110 installiert.

Im vorliegenden Ausführungsbeispiel sind bzw. umfassen die Ablaufsteuerungskomponenten Software-Container, die jeweils von anderen Software-Containern, Container-Gruppen bzw. Pods isoliert innerhalb der Ablaufsteuerungsumgebung 112 auf dem Host-Betriebssystem 111 der Server-Einrichtung 110 ablaufen. Dabei nutzen die Software-Container jeweils gemeinsam mit anderen auf der Server-Einrichtung 110 ablaufenden Software-Containern einen Kernel des Host-Betriebssystems 111 der Server-Einrichtung 110. Die Ablaufsteuerungsumgebung 112 ist insbesondere eine Container-Engine, durch die ein Anlegen, Löschen bzw. Verknüpfen von virtuellen Ressourcen erfolgt. Dabei können die virtuellen Ressourcen Software-Container, virtuelle Kommunikationsnetze und diesen zugeordnete Verbindungen umfassen.

Eine Isolation der Ablaufsteuerungskomponenten bzw. eine Isolation von ausgewählten Betriebssystemmitteln untereinander kann insbesondere mittels Control Groups und Namespacing realisiert werden. Mittels Control Groups lassen sich Prozessgruppen definieren, um verfügbare Ressourcen für ausgewählte Gruppen zu beschränken. Über Namespaces können einzelne Prozesse oder Control Groups gegenüber anderen Prozessen oder Control Groups isoliert bzw. verborgen werden. Speicherabbilder für Software-Container können beispielsweise aus einem durch eine Vielzahl von Nutzern lesend bzw. schreibend zugreifbaren Speicher- und Bereitstellungssystem abgerufen werden.

Zur Bereitstellung von zeitkritischen Diensten wird mittels der Ablaufsteuerungsumgebung 112 für jede Server-Komponente 114 ein eigenes virtuelles Kommunikationsnetz 114 verfügbar gemacht. Insbesondere können die virtuellen Kommunikationsnetze 114 jeweils virtuelle Ethernet-Punkt-zu-Punkt-Verbindungen umfassen bzw. jeweils durch eine virtuelle Bridge innerhalb der Ablaufsteuerungsumgebung 112 gebildet werden.

Ein Reverse-Proxy 101 eines die Server-Einrichtung 110 und die Ablaufsteuerungsumgebung 112 umfassenden Host-Systems oder Teilnetzes 100 leitet die Dienstzugriffsanfragen 11 zur Nutzung der Dienste außerhalb des Host-Systems bzw. Teilnetzes 100 entsprechend vorgegebenen Weiterleitungsregeln 121 an die jeweilige Server-Komponente 113 über deren virtuelles Kommunikationsnetz 114 weiter. Dabei werden die virtuellen Kommunikationsnetze 114 jeweils für sämtliche Anwendungsinstanzen der jeweiligen Server-Komponente 113 zur Weiterleitung der Dienstzugriffsanfragen 11 genutzt.

Eine Konfigurationseinheit 102 für den Reverse-Proxy 101 ermittelt jeweils zu innerhalb des Host-Systems bzw. Teilnetzes 100 gültigen Adressierungsinformationen, die den Server-Komponenten 113 bzw. ihren virtuellen Kommunikationsnetzen 114 zugeordnet sind, global gültige Zugangsinformationen 131 und übermittelt die Zugangsinformationen 131 abbildende Weiterleitungsregeln 121 an den Reverse-Proxy 101. Die innerhalb des Host-Systems bzw. Teilnetzes 100 gültigen Adressierungsinformationen sind beispielsweise Kommunikationsnetz-Adressen, Port-Nummern, Host-Namen bzw. vollständige Domain-Namen. Die global gültigen Zugangsinformationen 131 werden zur Nutzung der Dienste außerhalb des Host-Systems bzw. Teilnetzes 100 durch eine Verzeichnisdienst-Komponente 103 verfügbar gemacht.

Die global gültigen Zugangsinformationen 131 umfassen vorzugsweise Adressierungsinformationen und Zugriffsberechtigungen, wobei die Zugriffsberechtigungen erst nach erfolgreicher Benutzer- bzw. Geräte-Authentifizierung verfügbar gemacht werden. Zugriffsberechtigungen für ausgewählte Benutzer bzw. Geräte auf ausgewählte Dienste werden vorteilhafterweise auch durch die Weiterleitungsregeln 121 abgebildet.

Darüber hinaus ermittelt die Konfigurationseinheit 102, ob für eine in die Ablaufsteuerungsumgebung 112 zu ladende sowie dort auszuführende Ablaufsteuerungskomponente bereits ein zugeordnetes virtuelles Kommunikationsnetz 114 vorgesehen ist. Um dies zu ermitteln, greift die Konfigurationseinheit 102 auf in einer Datenbasis 120 gespeicherte Ablaufsteuerungsinformationen 122 für die Server-Komponente 114 bzw. die ihnen zugeordneten Ablaufsteuerungskomponenten zu.

Bei einem Vorhandensein eines zugeordneten virtuellen Kommunikationsnetzes 114 weist die Konfigurationseinheit 102 die Ablaufsteuerungsumgebung 112 mittels aus der Datenbasis 120 abgeleiteter Ablaufsteuerungsinformationen 122 an, dieses virtuelle Kommunikationsnetz 114 für eine Anbindung der Ablaufsteuerungskomponente an den Reverse-Proxy 102 zu verwenden. Dagegen weist die Konfigurationseinheit 102 die Ablaufsteuerungsumgebung 112 bei einem Fehlen eines zugeordneten virtuellen Kommunikationsnetzes 114 an, für die durch die Ablaufsteuerungskomponente gebildete Server-Komponente 113 ein virtuelles Kommunikationsnetz 114 innerhalb der Ablaufsteuerungsumgebung 112 einzurichten und dieses virtuelle Kommunikationsnetz 114 für eine Anbindung der Ablaufsteuerungskomponente an den Reverse-Proxy 102 zu verwenden.

Außerdem wertet die Konfigurationseinheit 102 Ereignis-Meldungen 123 der Ablaufsteuerungsumgebung 112 aus, ob virtuelle Kommunikationsnetze 114 innerhalb der Ablaufsteuerungsumgebung 112 einzurichten oder zu löschen sind. Mittels eines an die Ablaufsteuerungsumgebung 112 gerichteten ersten Steuerungsbefehls C1 verbindet die Konfigurationseinheit ein neu einzurichtendes virtuelles Kommunikationsnetz mit dem Reverse-Proxy 101 verbindet.

Demgegenüber beendet die Konfigurationseinheit 102 mittels eines an die Ablaufsteuerungsumgebung 112 gerichteten zweiten Steuerungsbefehls C2 eine Verbindung eines zu löschenden virtuellen Kommunikationsnetzes 114 mit dem Reverse-Proxy 101. Darüber hinaus gibt die Konfigurationseinheit 102 mittels eines an die Ablaufsteuerungsumgebung 112 gerichteten dritten Steuerungsbefehls C3 nach einem Beenden der Verbindung des zu löschenden virtuellen Kommunikationsnetzes 114 mit dem Reverse-Proxy 101 ein Entfernen der jeweiligen Server-Komponente 113 aus der Ablaufsteuerungsumgebung 112 frei.

## Patentansprüche

1. Verfahren zur Bereitstellung von zeitkritischen Diensten mittels einer Ablaufsteuerungsumgebung, bei dem
- den Diensten jeweils eine Server-Komponente (113) zugeordnet ist, die zumindest eine Anwendungsinstanz umfasst und durch eine in die Ablaufsteuerungsumgebung (112) ladbare sowie dort ausführbare Ablaufsteuerungskomponente gebildet wird,
- mittels der Ablaufsteuerungsumgebung für jede Server-Komponente ein eigenes virtuelles Kommunikationsnetz (114) verfügbar gemacht wird,
- ein Reverse-Proxy (101) eines die Ablaufsteuerungsumgebung umfassenden Teilnetzes (100) Dienstzugriffsanfragen (11) zur Nutzung der Dienste außerhalb des Teilnetzes entsprechend vorgegebenen Weiterleitungsregeln (121) an die jeweilige Server-Komponente über deren virtuelles Kommunikationsnetz weiterleitet,
- die virtuellen Kommunikationsnetze jeweils für sämtliche Anwendungsinstanzen der jeweiligen Server-Komponente zur Weiterleitung der Dienstzugriffsanfragen genutzt werden,
- eine Konfigurationseinheit (102) für den Reverse-Proxy (101) jeweils zu innerhalb des Teilnetzes (100) gültigen Adressierungsinformationen, die den Server-Komponenten (113) und/oder ihren virtuellen Kommunikationsnetzen (114) zugeordnet sind, global gültige Zugangsinformationen (131) ermittelt und die Zugangsinformationen abbildende Weiterleitungsregeln (121) an den Reverse-Proxy übermittelt,
- die Konfigurationseinheit (102) Ereignis-Meldungen (123) der Ablaufsteuerungsumgebung (112) auswertet, ob virtuelle Kommunikationsnetze (114) innerhalb der Ablaufsteuerungsumgebung einzurichten oder zu löschen sind,
- die Konfigurationseinheit mittels eines an die Ablaufsteuerungsumgebung gerichteten ersten Steuerungsbefehls (C1) ein neu einzurichtendes virtuelles Kommunikationsnetz mit dem Reverse-Proxy (101) verbindet,
- die Konfigurationseinheit mittels eines an die Ablaufsteuerungsumgebung gerichteten zweiten Steuerungsbefehls (C2) eine Verbindung eines zu löschenden virtuellen Kommunikationsnetzes mit dem Reverse-Proxy beendet,
- die Konfigurationseinheit (102) nach einem Beenden der Verbindung des zu löschenden virtuellen Kommunikationsnetzes (114) mit dem Reverse-Proxy (101) mittels eines an die Ablaufsteuerungsumgebung (112) gerichteten dritten Steuerungsbefehls (C3) ein Entfernen der jeweiligen Server-Komponente (113) aus der Ablaufsteuerungsumgebung freigibt.

2. Verfahren nach Anspruch 1,
bei dem die global gültigen Zugangsinformationen (131) Adressierungsinformationen und Zugriffsberechtigungen umfassen und bei dem die Zugriffsberechtigungen nach erfolgreicher Benutzer- und/oder Geräte-Authentifizierung verfügbar gemacht werden.

3. Verfahren nach Anspruch 2,
bei dem die Weiterleitungsregeln (121) Zugriffsberechtigungen für ausgewählte Benutzer und/oder Geräte auf ausgewählte Dienste abbilden.

4. Verfahren nach einem der Ansprüche 1 bis 3,
bei dem die innerhalb des Teilnetzes (100) gültigen Adressierungsinformationen Kommunikationsnetz-Adressen, Port-Nummern, Host-Namen und/oder vollständige Domain-Namen sind.

5. Verfahren nach einem der Ansprüche 1 bis 4,
bei dem die Konfigurationseinheit (102) ermittelt, ob für eine in die Ablaufsteuerungsumgebung (112) zu ladende sowie dort auszuführende Ablaufsteuerungskomponente bereits ein zugeordnetes virtuelles Kommunikationsnetz (114) vorgesehen ist, bei dem die Konfigurationseinheit die Ablaufsteuerungsumgebung bei einem Vorhandensein des zugeordneten virtuellen Kommunikationsnetzes anweist, dieses virtuelle Kommunikationsnetz für eine Anbindung der Ablaufsteuerungskomponente an den Reverse-Proxy (101) zu verwenden.

6. Verfahren nach Anspruch 5,
bei dem die Konfigurationseinheit (102) die Ablaufsteuerungsumgebung (112) bei einem Fehlen eines zugeordneten virtuellen Kommunikationsnetzes (114) anweist, für die durch die Ablaufsteuerungskomponente gebildete Server-Komponente (113) ein virtuelles Kommunikationsnetz innerhalb der Ablaufsteuerungsumgebung einzurichten und dieses virtuelle Kommunikationsnetz für eine Anbindung der Ablaufsteuerungskomponente an den Reverse-Proxy zu verwenden.

7. Verfahren nach einem der Ansprüche 1 bis 6,
bei dem die Ablaufsteuerungskomponenten Software-Container sind oder umfassen, die jeweils von anderen Software-Containern oder Container-Gruppen isoliert innerhalb der Ablaufsteuerungsumgebung (112) auf einem Host-Betriebssystem (111) einer Server-Einrichtung (110) ablaufen.

8. Verfahren Anspruch 7,
bei dem die Ablaufsteuerungsumgebung eine Container-Engine ist, durch die ein Anlegen, Löschen und/oder Verknüpfen von virtuellen Ressourcen erfolgt, wobei die virtuellen Ressourcen Software-Container, virtuelle Kommunikationsnetze und diesen zugeordnete Verbindungen umfassen.

9. Verfahren nach einem der Ansprüche 1 bis 8,
bei dem für jede Anwendungsinstanz jeweils eine Ablaufsteuerungskomponente in die Ablaufsteuerungsumgebung geladen und dort ausgeführt wird.

10. Verfahren nach einem der Ansprüche 1 bis 9,
bei dem zumindest eine Verzeichnisdienst-Komponente (103) die global gültigen Zugangsinformationen (131) zur Nutzung der Dienste außerhalb des Teilnetzes verfügbar macht.

11. Verfahren nach einem der Ansprüche 1 bis 10,
bei dem die virtuellen Kommunikationsnetze (114) jeweils virtuelle Ethernet-Punkt-zu-Punkt-Verbindungen umfassen und/oder jeweils durch eine virtuelle Bridge innerhalb der Ablaufsteuerungsumgebung (112) gebildet werden.

12. System zur Bereitstellung von zeitkritischen Diensten mittels einer Ablaufsteuerungsumgebung mit
- einer Ablaufsteuerungsumgebung (112),
- einem die Ablaufsteuerungsumgebung umfassenden Teilnetz (100),
- einem Reverse-Proxy (101) des Teilnetzes,
- einer Konfigurationseinheit (102) für den Reverse-Proxy (101),
- mehreren, jeweils einem Dienst zugeordneten Server-Komponenten (113), die jeweils zumindest eine Anwendungsinstanz umfassen und durch eine in die Ablaufsteuerungsumgebung (112) ladbare sowie dort ausführbare Ablaufsteuerungskomponente gebildet sind,
- wobei die Ablaufsteuerungsumgebung dafür ausgestaltet und eingerichtet ist, dass für jede Server-Komponente ein eigenes virtuelles Kommunikationsnetz (114) verfügbar gemacht wird,
- wobei der Reverse-Proxy dafür ausgestaltet und eingerichtet ist, Dienstzugriffsanfragen (11) zur Nutzung der Dienste außerhalb des Teilnetzes entsprechend vorgegebenen Weiterleitungsregeln an die jeweilige Server-Komponente über deren virtuelles Kommunikationsnetz weiterzuleiten,
- wobei die virtuellen Kommunikationsnetze dafür ausgestaltet und eingerichtet sind, jeweils für sämtliche Anwendungsinstanzen der jeweiligen Server-Komponente zur Weiterleitung der Dienstzugriffsanfragen genutzt zu werden,
- wobei die Konfigurationseinheit (102) für den Reverse-Proxy (101) dafür ausgestaltet und eingerichtet ist, jeweils zu innerhalb des Teilnetzes (100) gültigen Adressierungsinformationen, die den Server-Komponenten (113) und/oder ihren virtuellen Kommunikationsnetzen (114) zugeordnet sind, global gültige Zugangsinformationen (131) zu ermitteln und die Zugangsinformationen abbildende Weiterleitungsregeln (121) an den Reverse-Proxy zu übermitteln,
- wobei die Konfigurationseinheit ferner dafür ausgestaltet und eingerichtet ist, Ereignis-Meldungen (123) der Ablaufsteuerungsumgebung (112) auszuwerten, ob virtuelle Kommunikationsnetze (114) innerhalb der Ablaufsteuerungsumgebung einzurichten oder zu löschen sind,
- wobei die Konfigurationseinheit ferner dafür ausgestaltet und eingerichtet ist, mittels eines an die Ablaufsteuerungsumgebung gerichteten ersten Steuerungsbefehls (C1) ein neu einzurichtendes virtuelles Kommunikationsnetz mit dem Reverse-Proxy (101) zu verbinden,
- wobei die Konfigurationseinheit ferner dafür ausgestaltet und eingerichtet ist, mittels eines an die Ablaufsteuerungsumgebung gerichteten zweiten Steuerungsbefehls (C2) eine Verbindung eines zu löschenden virtuellen Kommunikationsnetzes mit dem Reverse-Proxy zu beenden,
- wobei die Konfigurationseinheit ferner dafür ausgestaltet und eingerichtet ist, nach einem Beenden der Verbindung des zu löschenden virtuellen Kommunikationsnetzes (114) mit dem Reverse-Proxy (101) mittels eines an die Ablaufsteuerungsumgebung (112) gerichteten dritten Steuerungsbefehls (C3) ein Entfernen der jeweiligen Server-Komponente (113) aus der Ablaufsteuerungsumgebung freizugeben.

## Claims

1. Method for providing time-critical services by means of a process control environment, in which
- a server component (113) is assigned to the services in each case and comprises at least one application instance and is formed by a process control component which can be loaded into the process control environment (112) and can be executed there,
- a separate virtual communication network (114) is made available for each server component by means of the process control environment,
- a reverse proxy (101) of a subnetwork (100) comprising the process control environment forwards predetermined forwarding rules (121) corresponding to service access requests (11) for using the services outside of the subnetwork to the respective server component by way of its virtual communication network,
- the virtual communication networks are each used for all application instances of the respective server component for forwarding the service access requests,
- a configuration unit (102) for the reverse proxy (101) determines globally valid access information (131) in each case relating to addressing information which is valid within the subnetwork (100) and which is assigned to the server components (113) and/or their virtual communication networks (114) and transfers forwarding rules (121) mapping access information to the reverse proxy,
- the configuration unit (102) evaluates event messages (123) of the process control environment (112) to determine whether virtual communication networks (114) are to be set up or deleted within the process control environment,
- the configuration unit connects a new virtual communication network to be set up to the reverse proxy (101) by means of a first control command (C1) directed at the process control environment,
- the configuration unit terminates a connection of a virtual communication network to be deleted to the reverse proxy by means of a second control command (C2) directed at the process control environment,
- after terminating the connection between the virtual communication network (114) to be deleted and the reverse proxy (101), the configuration unit (102) enables a removal of the respective server component (113) from the process control environment by means of a third control command (C3) directed at the process control environment (112).

2. Method according to claim 1,
in which the globally valid access information (131) comprises addressing information and access authorisations and in which the access authorisations are made available following successful user and/or device authentication.

3. Method according to claim 2,
in which the forwarding rules (121) map access authorisations for selected users and/or devices to selected services.

4. Method according to one of claims 1 to 3,
in which the addressing information valid within the subnetwork (100) is communication network addresses, port numbers, host names and/or complete domain names.

5. Method according to one of claims 1 to 4,
in which the configuration unit (102) determines whether an assigned virtual communication network (114) is already provided for a process control component to be loaded into the process control environment (112) and to be executed there, in which in the presence of the assigned virtual communication network the configuration unit instructs the process control environment to use this virtual communication network for connecting the process control component to the reverse proxy (101).

6. Method according to claim 5,
in which the configuration unit (102) instructs the process control environment (112), in the absence of an assigned virtual communication network (114), to set up a virtual communication network within the process control environment for the server component (113) formed by the process control component and to use this virtual communication network to connect the process control component to the reverse proxy.

7. Method according to one of claims 1 to 6,
in which the process control components are or comprise software containers which each run from other software containers or container groups in an isolated manner within the process control environment (112) on a host operating system (111) of a server facility (110).

8. Method according to claim 7,
in which the process control environment is a container engine, by means of which an application, deletion and/or linking of virtual resources takes place, wherein the virtual resources comprise software containers, virtual communication networks and connections assigned hereto.

9. Method according to one of claims 1 to 8,
in which for each application instance a process control component is loaded into the process control environment and executed there in each case.

10. Method according to one of claims 1 to 9,
in which at least one directory service component (103) makes the globally valid access information (131) available in order to use the services outside of the subnetwork.

11. Method according to one of claims 1 to 10,
in which the virtual communication networks (114) each comprise virtual Ethernet point-to-point connections and/or are each formed by a virtual bridge within the process control environment (112).

12. System for providing time-critical services by means of a process control environment, having
- a process control environment (112),
- a subnetwork (100) comprising the process control environment,
- a reverse proxy (101) of the subnetwork,
- a configuration unit (102) for the reverse proxy (101),
- a number of server components (113) assigned to a service in each case, which comprise at least one application instance in each case and are formed by a process control component which can be loaded into the process control environment (112) and can be executed there,
- wherein the process control environment is configured and set up for this purpose so that a separate virtual communication network (114) is made available for each server component,
- wherein the reverse proxy is configured and set up to forward predetermined forwarding rules corresponding to service access requests (11) in order to use the services outside of the subnetwork to the respective server component by way of its virtual communication network,
- wherein the virtual communication networks are configured and set up for this purpose to be used in each case for all application instances of the respective server component for forwarding the service access requests,
- wherein the configuration unit (102) is configured and set up for the reverse proxy (101) to determine globally valid access information (131) in each case with respect to addressing information which is valid within the subnetwork (100) and assigned to the server components (113) and/or their virtual communication networks (114) and to transmit the forwarding rules (121) mapping the access information to the reverse proxy,
- wherein the configuration unit is further configured and set up to evaluate event messages (123) of the process control environment (112) to determine whether virtual communication networks (114) are to be set up or deleted within the process control environment,
- wherein the configuration unit is further configured and set up to connect a virtual communication network which is newly to be set up to the reverse proxy (101) by means of a first control command (C1) directed at the process control environment,
- wherein the configuration unit is further configured and set up to terminate a connection between a virtual communication network to be deleted and the reverse proxy by means of a second control command (C2) directed at the process control environment,
- wherein after terminating the connection between the virtual communication network (114) to be deleted and the reverse proxy (101) the configuration unit is further configured and set up to enable a removal of the respective server component (113) from the process control environment by means of a third control command (C3) directed at the process control environment (112).

## Revendications

1. Procédé pour disposer de services critiques du point de vue du temps au moyen d'un environnement de commande de déroulement, dans lequel
- aux services, on affecte respectivement un composant (113) serveur, qui comprend au moins une instance d'application et qui est formé par un composant de commande de déroulement pouvant être chargé dans l'environnement (112) de commande de déroulement ainsi que pouvant y être exécuté,
- au moyen de l'environnement de commande de déroulement, on rend disponible pour chaque composant serveur son propre réseau (114) de communication virtuel,
- un proxy inverse (101) d'un réseau (100) partiel comprenant l'environnement de commande de déroulement achemine au composant serveur respectif par son réseau de communication virtuel des règles (121) d'acheminement données à l'avance correspondant à des demandes (11) d'accès aux services pour l'utilisation des services en dehors du réseau partiel,
- on utilise les réseaux de communication virtuels respectivement pour l'ensemble des instances d'application des composants serveurs respectifs pour l'acheminement des demandes d'accès aux services,
- une unité (102) de configuration détermine, pour le proxy reverse (101) respectivement des informations d'adressage valables dans le réseau (100) partiel, qui sont affectées aux composants serveurs (113) et/ou à leurs réseaux (114) de communication virtuels, des informations (131) d'accès valables et transmet au reverse proxy des règles (121) d'acheminement reproduisant les informations d'accès,
- l'unité (102) de configuration évalue des messages (123) d'évènement de l'environnement (112) de commande de déroulement sur le point de savoir, si des réseaux (114) de communication virtuels sont agencés dans l'environnement de commande de déroulement ou doivent être effacés,
- l'unité de configuration met, au moyen d'une première instruction (C1) de commande dirigée sur l'environnement de commande de déroulement, un réseau de communication virtuel à installer nouvellement en communication avec le proxy (101) inverse,
- l'unité de configuration met fin, au moyen d'une deuxième instruction (C2) de commande dirigée sur l'environnement de commande de déroulement, à une liaison d'un réseau de communication virtuel à effacer avec le proxy inverse,
- l'unité (102) de configuration, après qu'il a été mis fin à la liaison du réseau (114) de communication virtuel à effacer avec le proxy (101) inverse, valide, au moyen d'une troisième instruction (C3) de commande dirigée sur l'environnement (112) de commande de déroulement, un éloignement du composant serveur (113) respectif de l'environnement de commande de déroulement.

2. Procédé suivant la revendication 1,
dans lequel les informations (131) valables globalement comprennent des informations d'adressage et des justifications d'accès et dans lequel on rend disponible les justifications d'accès après une authentification d'utilisateur et/ou d'appareil couronné de succès.

3. Procédé suivant la revendication 2,
dans lequel les règles (121) d'acheminement reproduisent des justifications d'accès pour des utilisateurs et/ou des appareils sélectionnés à des services sélectionnés.

4. Procédé suivant l'une des revendications 1 à 3,
dans lequel les informations d'adressage valables dans le réseau (100) partiel sont des adresses de réseau de communication, des numéros d'accès, des noms d'hôtes et/ou des noms de domaines complets.

5. Procédé suivant l'une des revendications 1 à 4,
dans lequel l'unité (102) de configuration détermine s'il est prévu pour un composant de commande de déroulement à charger dans l'environnement (112) de commande de déroulement ainsi que s'y exécutant, déjà un réseau (114) de communication virtuel affecté, dans lequel l'unité de configuration donne instruction à l'environnement de commande de déroulement, en présence du réseau de communication virtuel affecté, d'utiliser ce réseau de communication virtuel pour une liaison du composant de commande de déroulement au proxy (101) inverse.

6. Procédé suivant la revendication 5,
dans lequel l'unité (102) de configuration donne instruction à l'environnement (112) de commande de déroulement s'il manque un réseau (114) de communication virtuel affecté, d'établir, pour le composant serveur (113) formé par le composant de commande de déroulement, un réseau de communication virtuel dans l'environnement de commande de déroulement et d'utiliser ce réseau de communication virtuel pour une liaison du composant de commande de déroulement avec le proxy inverse.

7. Procédé suivant l'une des revendications 1 à 6,
dans lequel les composants de commande de déroulement sont ou comprennent des conteneurs logiciels, qui, respectivement isolés d'autres conteneurs logiciels ou groupes de conteneurs logiciels, se déroulent dans l'environnement (112) de commande de déroulement sur un système (111) de fonctionnement hôte d'un dispositif (110) serveur.

8. Procédé suivant la revendication 7,
dans lequel l'environnement de commande de déroulement est un moteur conteneur, par lequel s'effectue une application, un effacement et/ou une combinaison de ressources virtuelles, dans lequel les conteneurs logiciels de ressources virtuelles comprennent des réseaux de communication virtuels et des liaisons affectées à ceux-ci.

9. Procédé suivant l'une des revendications 1 à 8,
dans lequel pour chaque instance d'application on charge respectivement un composant de commande de déroulement dans l'environnement de commande de déroulement et on l'y exécute.

10. Procédé suivant l'une des revendications 1 à 9,
dans lequel au moins un composant (103) de service de relevé rend disponible les informations (131) d'accès valables dans l'ensemble pour l'utilisation des services en dehors du réseau partiel.

11. Procédé suivant l'une des revendications 1 à 10,
dans lequel les réseaux (114) de communication virtuels comprennent respectivement des liaisons point à point Ethernet virtuelles et/ou sont formées respectivement par un bridge virtuel dans l'environnement (112) de commande de déroulement.

12. Système de mise à disposition de services critiques du point de vue du temps au moyen d'un environnement de commande de déroulement comprenant
- un environnement (112) de commande de déroulement,
- un réseau (100) partiel comprenant l'environnement de commande de déroulement,
- un proxy (101) inverse du réseau partiel,
- une unité (102) de configuration du proxy (101) inverse,
- plusieurs composants serveur (113) affectés respectivement à un service, qui comprennent respectivement au moins une instance d'application et qui sont formés par un composant de commande de déroulement pouvant être chargé dans l'environnement (112) de commande de déroulement ainsi que pouvant y être exécuté,
- dans lequel l'environnement de commande de déroulement est conformé et agencé pour, pour chaque composant serveur, rendre disponible son propre réseau (114) de communication virtuel,
- dans lequel le proxy inverse est conformé et agencé pour acheminer au composant serveur respectif par son réseau de communication virtuel des règles d'acheminement données à l'avance correspondant aux demandes (11) d'accès de services pour l'utilisation des services en dehors du réseau partiel,
- dans lequel les réseaux de communication virtuels sont conformés et agencés pour être utilisés respectivement pour des instances d'application d'ensemble des composants serveur respectifs pour l'acheminement des demandes d'accès aux services,
- dans lequel l'unité (102) de configuration du proxy (101) inverse est conformée et agencée pour déterminer des informations (131) d'accès valables globalement respectivement par rapport à des informations d'adressage valables dans le réseau (100) partiel, qui sont affectées au composant serveur (113) et/ou à leurs réseaux (114) de communication virtuels et transmettre au proxy inverse les règles (121) d'acheminement reproduisant les informations d'accès,
- dans lequel l'unité de configuration est en outre conformée et agencée pour évaluer des messages (123) d'évènement de l'environnement (112) de commande de déroulement sur le point de savoir, si des réseaux (114) de communication virtuels sont établis à l'intérieur de l'environnement de commande de déroulement sont à établir à l'intérieur de l'environnement de commande de déroulement ou à effacer,
- dans lequel l'unité de configuration est conformée et agencée en outre pour relier, au moyen d'une première instruction (C1) de commande dirigée sur l'environnement de commande de déroulement, un réseau de communication virtuel à établir nouvellement au proxy (101) inverse,
- dans lequel l'unité de configuration est en outre conformée et agencée pour mettre fin, au moyen d'une deuxième instruction (C2) de commande dirigée sur l'environnement de commande de déroulement, à une liaison d'un réseau de communication virtuel à effacer avec le proxy inverse,
- dans lequel l'unité de configuration est conformée et agencée en outre pour, après qu'il a été mis fin à la liaison du réseau (114) de communication virtuel à effacer avec le proxy (101) inverse, valider, au moyen d'une troisième instruction (C3) de commande dirigée sur l'environnement (112) de commande de déroulement, un éloignement du composant serveur (113) respectif de l'environnement de commande de déroulement.
